(19) Europäisches Patentamt
European Patent Office
Office européen des brevets

(11) Veröffentlichungsnummer: **0 548 619 B1**

(12) # EUROPÄISCHE PATENTSCHRIFT

(45) Veröffentlichungstag der Patentschrift: **27.09.95**

(51) Int. Cl.[6]: **C09D 17/00**, C09B 67/00, C14C 11/00

(21) Anmeldenummer: **92120624.9**

(22) Anmeldetag: **03.12.92**

(54) **Verwendung von Pigmentpräparationen zum Pigmentieren oder Mattieren von Zurichtmitteln für Leder und Lederimitate.**

(30) Priorität: **20.12.91 DE 4142240**

(43) Veröffentlichungstag der Anmeldung:
**30.06.93 Patentblatt 93/26**

(45) Bekanntmachung des Hinweises auf die Patenterteilung:
**27.09.95 Patentblatt 95/39**

(84) Benannte Vertragsstaaten:
**BE DE ES FR GB IT NL PT**

(56) Entgegenhaltungen:
**EP-A- 0 156 971**
**DE-A- 2 841 540**
**DE-A- 3 022 542**

**CHEMICAL ABSTRACTS, vol. 106, no. 16, April 1987, Columbus, Ohio, US; abstract no. 121478c, 'PIGMENT COMPOSITIONS FOR WATERBORNE INKS AND COATINGS' Seite 92 ;Spalte 1 ;& JP-A-61 138 667**

**DAS LEDER Bd. 37, Nr. 1, Januar 1986, DARMSTADT,DE Seite 12 & SU-A-992 581**

(73) Patentinhaber: **BASF Aktiengesellschaft**
**Carl-Bosch-Strasse 38**
**D-67063 Ludwigshafen (DE)**

(72) Erfinder: **Belde, Horst**
**Dubliner Strasse 21**
**W-6700 Ludwigshafen (DE)**
Erfinder: **Herrmann, Manfred, Dr.**
**Parkstrasse 23**
**W-6700 Ludwigshafen (DE)**
Erfinder: **Leppmeier, Franz, Dr.**
**Russiconstrasse 47**
**W-6700 Ludwigshafen (DE)**
Erfinder: **Lach, Dietrich, Dr.**
**Gartenweg 16**
**W-6701 Friedelsheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft die Verwendung von Pigmentpräparationen, enthaltend im wesentlichen Pigmente oder Mattierungsmittel oder eine Mischung hieraus, Bindemittel, Wasser und gewünschtenfalls weitere übliche Dispergier- und Hilfsmittel, zum Pigmentieren oder Mattieren von Zurichtmitteln für Leder und Lederimitate. Weiterhin betrifft die Erfindung ein Verfahren zur Herstellung von Leder und Lederimitaten durch Behandeln mit diesen Zurichtmitteln.

Die Eigenschaften von zugerichtetem Leder und Lederimitaten hängen in besonderem Maße von den eingesetzten Zurichtmitteln ab. Von großen Einfluß sind dabei auch die den Zurichtmitteln zugemischten Pigmentpräparationen für wäßrige Systeme. Vom Pigment selbst wird beispielsweise die Licht- und Migrationsechtheit sowie das Deckvermögen beeinflußt. Die zum Dispergieren der Pigmente und zum Stabilisieren der Pigmentpräparationen verwendeten Substanzen können dagegen Echtheiten wie Naß- und Trockenreibechtheiten, die Naßhaftung, die Bügelbarkeit, die Güte der Hydrophobierung bei hydrophobiertem Leder sowie insbesondere auch die sensorischen Eigenschaften wie Aussehen und Griff beeinflussen.

Als filmbildende Bindemittel für solche Pigmentpräparationen, deren Hauptfunktionen in der dispergierenden Wirkung und in den Schutzkolloid-Eigenschaften zu sehen sind, sind vor allem Casein, Mischpolymerisate aus Styrol und Maleinsäure sowie Vinylpyrrolidon enthaltende Polymerisate bekannt. So werden z.B. in der EP-B 086 354 (1) Polymerisate aus Acrylsäureestern, Methacrylsäureestern, N-Vinylpyrrolidon, Acrylsäure und Vinylestern als Bindemittel für Pigmentpräparationen beschrieben; diese Polymerisate werden durch Polymerisation in mit Wasser mischbaren organischen Lösungsmitteln hergestellt.

Aus der EP-A 100 444 (2) sind Druckfarbenbindemittel auf Basis von durch Zusatz von Basen wasserverdünnbaren carboxylgruppenhaltigen Copolymerisaten bekannt, die aus $\alpha$, $\beta$-olefinisch ungesättigten $C_3$- bis $C_5$-Monocarbonsäuren, Vinylaromaten und gegebenenfalls weiteren acrylisch ungesättigten Monomeren aufgebaut sind.

Derartige Bindemittel bringen allerdings in vielen Fällen eine Reihe von Nachteilen mit sich. So lassen sich oft keine stabilen hochkonzentrierten Zubereitungen der Pigmente herstellen, denn für stabile Pigmentpräparationen sind in der Regel hohe Bindemittelmengen notwendig und die genannten Bindemittel verursachen in hohen Mengen oft Viskositätsprobleme. Weiterhin wirken die Bindemittel häufig verhärtend auf die Zurichtschicht des behandelten Leders. Die Echtheiten des Leders können negativ beeinflußt werden. Aussehen und Griff des Leders werden oft verschlechtert. Bei Verwendung von Bindemitteln, welche wie die in (1) beschriebenen Polymerisate in organischen Lösungsmitteln hergestellt und mit diesen in die Zurichtmittel eingearbeitet wurden, bleibt das zugerichtete Leder meist noch längere Zeit zu weich und zeigt eine schlechte Naßreibechtheit und Quellfestigkeit. Zudem ist die Verwendung organischer Lösungsmittel auch im Hinblick auf die Umweltverträglichkeit bedenklich.

Aufgabe der vorliegenden Erfindung war es daher, die Nachteile des Standes der Technik durch die Bereitstellung verbesserter Bindemittel für Pigmentpräparationen zu Lederzurichtzwecken zu beseitigen, wobei besonderer Wert auf Zubereitungen gelegt wurde, die frei von organischen Lösungsmitteln sind.

Demgemäß wurde die Verwendung von Pigmentpräparationen, enthaltend im wesentlichen Pigmente oder Mattierungen oder eine Mischung hieraus, Bindemittel, Wasser und gewünschtenfalls weitere übliche Dispergier- und Hilfsmittel, zum Pigmentieren oder Mattieren von Zurichtmitteln für Leder und Lederimitate gefunden, welche dadurch gekennzeichnet sind, daß man als Bindemittel Copolymerisate aus

A) 40 bis 80 Gew.-% mindestens eines Vinylaromaten der allgemeinen Formel I

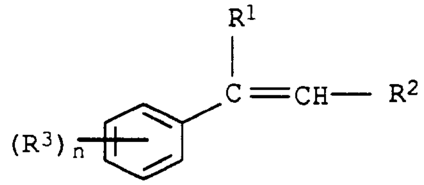

I

in der $R^1$, $R^2$ und $R^3$ für Wasserstoff, Methyl oder Ethyl stehen und n 1 oder 2 bedeutet,

B) 20 bis 60 Gew.-% Acrylsäure oder Methacrylsäure oder einer Mischung hieraus und

C) 0 bis 10 Gew.-% weiterer copolymerisierbarer Monomerer

in Form ihrer Salze einsetzt.

Der Rest $R^1$ steht vorzugsweise für Wasserstoff oder Methyl, die Reste $R^2$ und $R^3$ bezeichnen vorzugsweise Wasserstoff und n bedeutet vorzugsweise 1. Steht $R^3$ im Fall n = 1 für Methyl oder Ethyl,

liegt eine ortho-, meta- oder vorzugsweise para-Substitution am Phenylkern vor. Steht $R^3$ im Fall n = 2 für Methyl oder Ethyl, ist das Substitutionsmuster am Phenylkern vorzugsweise 2,4.

Als Vinylaromaten I für die Komponente A eignen sich insbesondere Styrol oder α-Methylstyrol oder eine Mischung hieraus.

Als Komponente B wird Acrylsäure bevorzugt.

Komponente A wird vorzugsweise in einer Menge von 55 bis 65 Gew.-%, Komponente B in einer Menge von 35 bis 45 Gew.-% eingesetzt. Ganz besonders bevorzugt wird ein Copolymerisat aus ca. 60 Gew.-% der Komponente A und ca. 40 Gew.-% der Komponente B.

Als weitere copolymerisierbare Monomere C können zur geringfügigen Modifikation der Copolymerisate aus A und B in Mengen bis zu 10 Gew.-%, vorzugsweise bis zu 5 Gew.-%, insbesondere bis zu 2 Gew.-%, beispielsweise Acrylsäureester oder Methacrylsäureester mit bis zu 12 C-Atomen im Alkoholrest, Acryl- oder Methacrylnitril, Acryl- oder Methacrylsäureamid, N-Vinylpyrrolidon, Vinylacetat, Vinylpropionat, Vinylchlorid oder Vinylidenchlorid mitverwendet werden.

Das Copolymerisat aus A, B und C wird vorzugsweise in Form seines Ammoniumsalzes eingesetzt, man kann aber beispielsweise auch die Alkalimetallsalze, z.B. das Natrium- oder Kaliumsalz, verwenden. Es ist notwendig, daß die eingesetzten Copolymerisat-Salze eine für den beschriebenen Anwendungszweck ausreichende Wasserlöslichkeit aufweisen. Die Carboxylgruppen des Copolymerisates können auch in teilneutralisierter Form vorliegen, dabei sollten aber mindestens 30 %, besser 50 % der Carboxylgruppen als Ammonium- oder Alkalimetallsalz vorliegen.

Das mittlere Molekulargewicht $M_n$ des Copolymerisates aus A, B und C beträgt in der Regel 400 bis 4000.

Derartige Copolymerisate sind im Prinzip aus der EP-A 100 444 (2) bekannt. Dort werden Copolymerisate beschrieben, welche durch kontinuierliche Massepolymerisation eines Monomerengemisches aus

A') 25 bis 50 Gew.-% einer α,β-olefinisch ungesättigten Monocarbonsäure wie Acrylsäure oder Methacrylsäure,

B') 50 bis 75 Gew.-% eines Vinylaromaten wie Styrol, Vinyltoluol oder α-Methylstyrol und

C') 0 bis 10 Gew.-% eines copolymerisierbaren acrylisch ungesättigten Monomeren

bei Temperaturen von 200 bis 400 °C in Abwesenheit von radikalliefernden Polymerisationsinitiatoren und Regler hergestellt werden. Diese Copolymerisate dienen als Bindemittel für wäßrige Druckfarben zum Bedrucken von Papier, Kunststoff- und Metallfolien.

Das Bindemittel in den erfindungsgemäß eingesetzten Pigmentpräparationen wird normalerweise als Lösung in die Pigmentpräparationen eingearbeitet. Bei der Lösung des Bindemittels handelt es sich vorzugsweise um eine rein wäßrige Lösung. Die erfindungsgemäß verwendeten Mittel können aber auch eingesetzt werden, wenn die Lösung noch mit Wasser mischbare organische Lösungsmittel, z.B. Ethylenglykol oder Methoxypropanol oder Mischungen hieraus, in einer Menge von bis zu 30 Gew.-%, insbesondere bis zu 10 Gew.-%, bezogen auf die Wassermenge, enthält. Die bei der Herstellung der Pigmentpräparationen zugemischte Bindemittellösung hat einen Feststoffgehalt von normalerweise 10 bis 50 Gew.-%.

Die Pigmente und Mattierungsmittel, die in den erfindungsgemäß verwendeten Pigmentpräparationen enthalten sind, können organischer oder anorganischer Natur sein. Geeignete organische Pigmente sind z.B. solche der Azo-, Anthrachinon-, Azophosphin-, Thioindigo-, Dioxazin-, Naphthalintetracarbonsäure- und Perylentetracarbonsäure-Reihe, kupferfreie oder kupferhaltige Phthalocyanine sowie verlackte Farbstoffe wie Calcium-, Magnesium- oder Aluminium-Lacke von Sulfonsäuregruppen oder Carbonsäuregruppen enthaltenden Farbstoffen. Geeignete anorganische Pigmente und Mattierungsmittel sind z.B. Titandioxide, Eisenoxide, Ruß, Nickel-Chrom-Verbindungen, Siliciumdioxide, Aluminiumoxide, Ultramarin und Spinelle.

Die Pigment- bzw. Mattierungsmittelauswahl für die Lederzurichtung erfolgt nach dem gewünschten Farb- bzw. Mattierungseffekt. Anorganische Pigmente werden beispielsweise dann eingesetzt, wenn hohe Deckkraft erwünscht ist, organische Pigmente verwendet man dagegen, wenn Lasur mit hoher Brillanz und Farbstärke verbunden sein soll. Auch Mischungen beider Pigmentklassen sind möglich.

Weitere übliche Dispergiermittel und sonstige Hilfsmittel wie Netzmittel, Antischaummittel, Verdickungsmittel, Wasserrückhaltemittel, Biozide und pH-Regulatoren sind z.B. alkoxylierte Fettalkohole und Oxoalkohole, Alkylphenole, Fettamine, Sojalecithin, Polysaccharide, Bentonite oder Polyphosphate. Sie werden in den hierbei üblichen Mengen zugesetzt.

In einer bevorzugten Ausführungsform enthalten die erfindungsgemäß verwendeten Pigmentpräparationen zusätzlich als Hilfsmittel Ammoniumsalze oder Alkalimetallsalze von Polyacrylsäuren. Ammoniumsalze von Polyacrylsäuren werden bevorzugt. Diese Polyacrylate, welche hauptsächlich als Netzmittel und/oder Verdickungsmittel dienen, bestehen aus Polyacrylsäuren mit einem K-Wert nach Fikentscher von 30 bis 100, vorzugsweise 50 bis 90 (gemessen als 1 gew.-%ige Lösung in Tetrahydrofuran). Das Polyacrylat wird normalerweise als Lösung in die Pigmentpräparationen eingearbeitet. Bei der Lösung handelt es sich

vorzugsweise um eine rein wäßrige Lösung; bezüglich der Mitverwendung von mit Wasser mischbaren organischen Lösungsmitteln gilt das für die Lösung des Bindemittels Gesagte. Eine solche bei der Herstellung der erfindungsgemäß verwendeten Pigmentpräparationen zugemischte Polyacrylatlösung hat einen Feststoffgehalt von normalerweise 5 bis 25 Gew.-%.

In einer weiteren bevorzugten Ausführungsform enthalten die erfindungsgemäß verwendeten Pigmentpräparationen zusätzlich als Hilfsmittel Umsetzungsprodukte von Ethylendiamin mit Ethylenoxid oder Umsetzungsprodukte von Ethylendiamin mit Propylenoxid und danach mit Ethylenoxid. Bevorzugt werden hiervon die letztgenannten Ethylendiamin-Propylenoxid-Ethylenoxid-Umsetzungsprodukte. Diese Umsetzungsprodukte dienen hauptsächlich als Benetzungsmediatoren. Ihr mittleres Molekulargewicht $M_n$ liegt üblicherweise bei 200 bis 20 000, vorzugsweise bei 5000 bis 15 000.

Die erfindungsgemäß verwendeten wäßrigen Pigmentpräparationen enthalten normalerweise, bezogen auf die Gesamtmenge der Zubereitung:

- 5 bis 70 Gew.-%, vorzugsweise 8 bis 50 Gew.-% Pigmente oder Mattierungsmittel oder eine Mischung hieraus,
- 0,1 bis 10 Gew.-%, vorzugsweise 0,5 bis 5 Gew.-% Copolymerisate aus A, B und C,
- 0,1 bis 10 Gew.-%, vorzugsweise 0,1 bis 2 Gew.-% Ammonium- oder Alkalimetallsalze von Polyacrylsäuren,
- 0,1 bis 10 Gew.-%, vorzugsweise 0,5 bis 3 Gew.-% Umsetzungsprodukte von Ethylendiamin mit Ethylenoxid oder Umsetzungsprodukte von Ethylendiamin mit Propylenoxid und danach mit Ethylenoxid sowie
- weitere übliche Dispergier- und Hilfsmittel in den hierbei üblichen Mengen,

wobei sich die Angaben jeweils auf die eingesetzten Feststoffe beziehen.

Die erfindungsgemäß verwendeten Pigmentpräparationen lassen sich in einfacher Weise durch Dispergieren der Komponenten in Naßmahlaggregaten wie Kugelmühlen, Rührwerkskugelmühlen oder Rotor-Statormühlen herstellen. Die mittlere Teilchengröße der Pigmente bzw. Mattierungsmittel liegt nach dem Dispergieren bei 0,1 bis 2 µm, insbesondere bei 0,1 bis 1 µm.

Gegenstand der vorliegenden Erfindung ist auch ein Verfahren zur Herstellung von Leder- und Lederimitaten durch Behandeln mit Zurichtmitteln mit den zugemischten beschriebenen Pigmentpräparaten.

Gegenstand der vorliegenden Erfindung sind weiterhin Zurichtmittel für Leder und Lederimitate mit den zugemischten beschriebenen Pigmentpräparationen.

Dem Fachmann sind Zubereitung und Einsatzmöglichkeiten von Zurichtmitteln für Leder und Lederimitate bekannt, so daß sich an dieser Stelle nähere Ausführungen hierüber erübrigen.

Mit den in den erfindungsgemäß verwendeten wäßrigen Pigmentpräparationen eingesetzten Bindemitteln aus Copolymerisaten der Komponenten A, B und C können stabile hochkonzentrierte Zubereitungen der Pigmente und Mattierungsmittel hergestellt werden. Bei der Lederzurichtung entstehen weiche und flexible Zurichtschichten, der Narben wird nicht belastet, das Leder wirkt daher unbeschichtet und zeigt einen feinen Narbenwurf. Das Leder weist hohe Eleganz im Aussehen und einen guten Griff auf. Man erhält hohe Naßechtheiten des zugerichteten Leders wie beispielsweise Naßreibechtheit, Naßknickfestigkeit und Naßhaftfestigkei, auch die Trockenreibechtheit ist ausgezeichnet. Die erfindungsgemäße Lederzurichtmethode ist in vorteilhafter Weise insbesondere bei hydrophobiertem Leder anwendbar, da die wasserabweisende Wirkung des Leders durch die Zurichtung nicht verschlechtert wird. Von besonderem Vorteil ist die Abwesenheit von organischen Lösungsmitteln in den erfindungsgemäß verwendeten Pigmentpräparationen.

Herstellungsbeispiele für Pigmentpräparationen

Allgemeine Herstellvorschrift für Beispiel 1 bis 10

Das Pigment oder die Mischung zweier Pigmente, die 35 gew.-%ige wäßrige Lösung eines Copolymerisates aus 60 Gew.-% Styrol und 40 Gew.-% Acrylsäure in Form seines Ammoniumsalzes (a), die 10 gew.-%ige wäßrige Lösung des Ammoniumsalzes einer Polyacrylsäure mit einem K-Wert nach Fikentscher von ca. 75 (gemessen als 1 gew.-%ige Lösung in Tetrahydrofuran) (b), das Umsetzungsprodukt von 1 Gew.-Teil Ethylendiamin mit 74,5 Gew.-Teilen Propylenoxid und danach mit 49,5 Gew.-Teilen Ethylenoxid mit einem mittleren Molekulargewicht $M_n$ von ca. 7500 ($c^1$) oder das Umsetzungsprodukt von 1 Gew.-Teil Ethylendiamin mit 124,5 Gew.-Teilen Propylenoxid und danach mit 83 Gew.-Teilen Ethylenoxid mit einem mittleren Molekulargewicht $M_n$ von ca. 12500 ($c^2$) sowie weitere übliche Dispergier- und Hilfsmittel (d) wurden in Wasser (e) eingerührt. Diese Suspension wurde mit Hilfe einer Rührwerkskugelmühle dispergiert. Nach der Dispergierung lag die mittlere Teilchengröße der Pigmente jeweils bei einem Wert zwischen 0,1 und 0,5 µm.

Die folgende Tabelle zeigt Einzelheiten der hergestellten Pigmentpräparationen.

Tabelle: Pigmentpräparationen

| Bsp. Nr. | Pigment Art* | Pigment Menge [g] | Lösung (a) Menge [g] | Lösung (b) Menge [g] | Produkt ($c^1/c^2$) Menge [g] | weitere Dispergier- und Hilfsmittel (d) Art | weitere Dispergier- und Hilfsmittel (d) Menge [g] | Wasser (e) Menge [g] |
|---|---|---|---|---|---|---|---|---|
| 1 | C.I. Pigment Blue 15:1 (Phthalocyanin) | 563** | 70 | 100 | 20 ($c^1$) | übliches Biozid<br>übl. Antischaummittel | 20<br>2 | 1285 |
| 2 | C.I. Pigment Red 101 (Rotes Eisenoxid) | 1600 | 200 | 200 | 40 ($c^1$) | Sojalecithin<br>übliches Biozid<br>übliches Verdikkungsmittel | 40<br>8<br>40 | 1872 |
| 3 | C.I. Pigment White 6 (Titandioxid) | 2500 | 200 | 150 | 50 ($c^1$) | Sojalecithin<br>übliches Biozid<br>übl. Antischaummittel | 50<br>50<br>5 | 1995 |

| Bsp. Nr. | Pigment Art* | Pigment Menge [g] | Lösung (a) Menge [g] | Lösung (b) Menge [g] | Produkt ($c^1$/$c^2$) Menge [g] | weitere Dispergier- und Hilfsmittel (d) Art | weitere Dispergier- und Hilfsmittel (d) Menge [g] | Wasser (e) Menge [g] |
|---|---|---|---|---|---|---|---|---|
| 4 | C.I. Pigment Yellow 34 (Chromgelb) | 1720 | 400 | 200 | 40 ($c^2$) | Sojalecithin<br>übliches Biozid<br>Natriumpolyphosphat | 20<br>40<br>10 | 1570 |
| 5 | C.I. Pigment Yellow 42 (Gefälltes Eisenoxid) | 1400 | 200 | 200 | 40 ($c^1$) | Sojalecithin<br>übliches Biozid | 80<br>40 | 2040 |
| 6 | C.I. Pigment Red 104 (Chrommolybdat)<br>C.I. Pigment Yellow 34 (Chromgelb) | 78<br>32 | 16 | 10 | 4 ($c^1$) | übliches Biozid | 4 | 256 |
| 7 | C.I. Pigment Red 123 (Perylentetracarbonsäure-Derivat) | 160 | 50 | 100 | 20 ($c^1$) | übliches Biozid | 20 | 1650 |
| 8 | C.I. Pigment Black 7 (Ruß) | 1000 | 350 | 250 | 50 ($c^1$) | übliches Biozid | 50 | 3300 |

| Bsp. Nr. | Pigment Art* | Pigment Menge [g] | Lösung (a) Menge [g] | Lösung (b) Menge [g] | Produkt ($c^1/c^2$) Menge [g] | weitere Dispergier- und Hilfsmittel (d) Art | weitere Dispergier- und Hilfsmittel (d) Menge [g] | Wasser (e) Menge [g] |
|---|---|---|---|---|---|---|---|---|
| 9 | C.I. Pigment Yellow 81 (Azopigment) | 30 | 10 | 5 | 2 ($c^2$) | übliches Biozid | 2 | 151 |
| 10 | C.I. Pigment Black 7 (Ruß) | 100 | 50 | 30 | 10 ($c^1$) | übliches Biozid<br>übliches Anti-schaum-mittel | 10<br>2 | 798 |

* Pigmentbezeichnungen gemäß Colour Index (C.I.)

** als 32 gew.-%iger wäßriger Preßkuchen

Anwendungsbeispiele für die Lederzurichtung

Beispiel 11: Geschliffenes weißes Rindleder für Schuhe

Als Grundiermischung wurde ein Gemisch aus 150 g der Pigmentpräparation aus Beispiel 3, 300 g einer hierfür üblichen Copolymerisatdispersion gemäß Beispiel 4 der EP-B 100 493, 100 g einer hierfür üblichen Copolymerisatdispersion gemäß Beispiel 1a4 der EP-B 100 493, 50 g einer wäßrigen Montanwachsemulsion (Feststoffgehalt ca. 30 Gew.-%) und 400 g Wasser verwendet. Das Leder wurde mit dieser Grundiermischung mit dem Plüschbrett einmal beschichtet, bei 70 °C getrocknet, bei 70 °C gebügelt, nochmals geplüscht und mit jeweiligem Zwischentrocknen bei 70 °C mit zwei Spritzaufträgen der Grundiermischung mit der Druckluftpistole besprüht. Die Auftragsmenge der Grundiermischung betrug ca. 80 g Feststoff pro $m^2$ Lederoberfläche.

Das grundierte Leder wurde anschließend mit einem Gemisch aus 465 g einer hierfür üblichen Copolymerisatdispersion gemäß Beispiel 7 der EP-B 100 493, 15 g einer Wachsemulsion auf Siliconbasis, 20 g der Pigmentpräparation aus Beispiel 3 und 500 g Wasser appretiert. Diese Appreturmischung wurde mittels Druckluftpistole in einem Spritzauftrag aufgetragen, wobei die Auftragsmenge ca. 15 g Feststoff pro $m^2$ Lederoberfläche betrug. Das Leder wurde dann bei 70 °C getrocknet und bei 80 °C gebügelt.

Das so erhaltene rein wäßrig zugerichtete Leder wies alle für Schuhoberleder gewünschten Eigenschaften auf. Die Naßreibechtheit gemäß DIN 53 339 (IUF 450) betrug 70 Reibtouren.

Vergleichsbeispiele 11A bis 11C

In Beispiel 11 wurde die erfindungsgemäß verwendete Pigmentpräparation aus Beispiel 3 durch entsprechende Pigmentpräparationen ersetzt, die als Bindemittel Casein (Beispiel 11A), ein übliches Mischpolymerisat aus Styrol und Maleinsäure (Beispiel 11B) oder ein Acrylat-Methacrylat-Vinylpyrrolidon-Acrylsäure-Vinylacetat-Polymerisat gemäß (1) (Beispiel 11C) enthielten.

Die Naßreibechtheiten gemäß DIN 53 339 (IUF 450) der hiermit erhaltenen Leder betrugen in allen drei Fällen deutlich weniger als bei der erfindungsgemäßen Zurichtung, nämlich bei Beispiel 11A 40 Reibtouren und bei Beispiel 11B und 11C jeweils 30 Reibtouren. Eine Erhöhung der Naßreibechtheiten ließ sich nur durch einen zusätzlichen Spritzauftrag mit der Appreturmischung erreichen. Durch diese stärkere Appreturschicht litt jedoch die Eleganz der Zurichtung, d.h. das Leder wirkte optisch und grifflich weniger natürlich.

Beispiel 12: Schwarzes Rindnappaleder für Autopolster

Als Grundmischung wurde ein Gemisch aus 100 g der Pigmentpräparation aus Beispiel 10, 300 g einer hierfür üblichen Copolymerisatdispersion gemäß Beispiel 1a1 der EP-B 100 493, 50 g einer wäßrigen Montanwachsemulsion (Feststoffgehalt ca. 30 Gew.-%), 50 g einer wäßrigen Kieselsäuredispersion (Feststoffgehalt ca. 13 Gew.-%), 100 g einer wäßrigen Dispersion eines aliphatischen Polyesterurethans (Filmhärte Shore A-45, Feststoffgehalt ca. 40 Gew.-%) und 400 g Wasser verwendet. Diese Grundiermischung wurde auf das schwarz gefärbte Leder mittels Druckluftpistole in 4 Spritzaufrägen aufgebracht, das Leder wurde jeweils bei 70 °C zwischengetrocknet und nach dem zweiten Spritzauftrag bei 80 °C gebügeit. Die Auftragsmenge der Grundiermischung betrug ca. 65 g Feststoff pro $m^2$ Lederoberfläche.

Das grundierte Leder wurde anschließend mit einem Gemisch aus 350 g einer mit Siliciumdioxid mattierten Polymerdispersion auf Basis Methylmethacrylat, Ethylacrylat und Acrylsäure (Feststoffgehalt ca. 20 Gew.-%), 100 g einer wäßrigen Dispersion eines aliphatischen Polyesterurethans (Filmhärte Shore A-95, Feststoffgehalt ca. 30 Gew.-%), 15 g eines üblichen wäßrigen Polyurethan-Verdickers (Feststoffgehalt ca. 25 Gew.-%), 35 g eines üblichen Isocyanat-Vernetzungsmittels auf Basis von trimerisiertem Hexamethylendiisocyanat in wäßriger Emulsion (Feststoffgehalt ca. 50 Gew.-%, NCO-Gehalt 9 %), 20 g der Pigmentpräparation aus Beispiel 10 und 400 g Wasser appretiert. Diese Appretiermischung wurde mittels Druckluftpistole in zwei Spritzaufträgen mit Zwischentrocknen und Schlußtrocknen bei jeweils 70 °C aufgetragen, wobei die Auftragsmenge ca. 15 g Feststoff pro $m^2$ Lederoberfläche betrug.

Das so erhaltene rein wäßrig zugerichtete Leder wies eine Naßreibechtheit gemäß DIN 53 339 (IUF 450) von 600 Reibtouren auf. Die Prüfung erfolgte nach einer Lagerzeit des zugerichteten Leders von 1 Woche, da es sich hier um eine vernetzte Zurichtung handelte.

Vergleichsbeispiele 12A bis 12C

In Beispiel 12 wurde die erfindungsgemäß verwendete Pigmentpräparation aus Beispiel 10 durch entsprechende Pigmentpräparationen ersetzt, die als Bindemittel Casein (Beispiel 12A), ein übliches Mischpolymerisat aus Styrol und Maleinsäure (Beispiel 12B) oder ein Acrylat-Methacrylat-Vinylpyrrolidon-Acrylsäure-Vinylacetat-Polymerisat gemäß (1) (Beispiel 12C) enthielten.

Die Naßreibechtheiten gemäß DIN 53 339 (IUF 450) der hiermit erhaltenen Leder betrugen in allen drei Fällen deutlich weniger als bei der erfindungsgemäßen Zurichtung, nämlich bei Beispiel 12A 250 Reibtouren, bei Beispiel 12B 350 Reibtouren und bei Beispiel 12C 200 Reibtouren.

Beispiel 13: Hydrophobiertes schwarzes Rindleder für Schuhe

Auf das mit einer hierfür üblichen wäßrigen Polymerdispersion auf Basis eines langkettigen Olefins und Maleinsäure hydrophobierte Rindleder wurde eine Haftgrundierung, bestehend aus 170 g einer hierfür üblichen Polyurethandispersion gemäß Beispiel 1, Zubereitung Z3, der DE-A 40 03 422 und 830 g Wasser, mittels einer Druckluftpistole in einem Spritzauftrag aufgebracht, wobei die Auftragsmenge ca. 6 g Feststoff pro $m^2$ Lederoberfläche betrug, und der Auftrag wurde bei 80 °C getrocknet.

Anschließend wurde eine Zurichtungsgrundzubereitung, bestehend aus 100 g der Pigmentpräparation gemäß Beispiel 8, 150 g einer hierfür üblichen Polyurethandispersion gemäß Beispiel 1 der DE-A 26 45 779, 30 g einer hierfür üblichen Polyacrylsäurebutylester-Dispersion (Feststoffgehalt ca. 50 Gew.-%), 50 g einer hierfür üblichen Copolymerisatdispersion gemäß Beispiel 1a4 der EP-B 100 493 und 700 g Wasser, mittels einer Druckluftpistole in zwei Spritzaufträgen aufgebracht, das Leder wurde bei 70 °C getrocknet, in einer hydraulischen Bügelpresse bei 70 °C und 50 bar gebügelt, es wurde erneut in zwei Spritzaufträgen Zurichtungsgrundzubereitung aufgebracht und bei 70 °C getrocknet. Die Gesamtauftragsmenge betrug ca. 50 g Feststoff pro $m^2$ Lederoberfläche.

Danach wurde auf das Leder eine hierfür übliche Appretur, bestehend aus 100 g einer Nitrocelluloselack-Emulsion (Feststoffgehalt 13 Gew.-%) und 50 g Wasser, mittels einer Druckluftpistole in zwei Spritzaufträgen mit Zwischentrocknung bei 70 °C aufgebracht, wobei die Auftragsmenge ca. 9 g Festsubstanz pro $m^2$ Lederoberfläche betrug, und der Auftrag wurde bei 70 °C getrocknet.

Das so erhaltene zugerichtete hydrophobierte Leder zeigte eine Naßreibechtheit von 550 Reibtouren. Die Güte der Hyrophobierung gemäß DIN 53 338 (gemessen im Penetrometer bei 15 % Stauchung) war nach der Zurichtung ebenfalls ausreichend, nach 6 Stunden war noch kein Wasserdurchtritt erfolgt.

Vergleichsversuche 13A bis 13C

In Beispiel 13 wurde die erfindungsgemäß verwendete Pigmentpräparation aus Beispiel 8 durch entsprechende Pigmentpräparationen ersetzt, die als Bindemittel Casein (Beispiel 13A), ein übliches Mischpolymerisat aus Styrol und Maleinsäure (Beispiel 13B) oder ein Acrylat-Methacrylat-Vinylpyrrolidon-Acrylsäure-Vinylacetat-Polymerisat gemäß (1) (Beispiel 13C) enthielten.

Die Naßreibechtheiten der hiermit erhaltenen Leder waren in allen drei Fällen deutlich schlechter als in Beispiel 13, nämlich bei Beispiel 13A 300 Reibtouren, bei Beispiel 13B 120 Reibtouren und bei Beispiel 13C 140 Reibtouren. Auch die Güte der Hydrophobierung war in Beispiel 13A bis 13C deutlich schlechter als in Beispiel 13, der Wasserdurchtritt erfolgte hier wesentlich früher, nämlich bei Beispiel 13A nach 4,5 Stunden, bei Beispiel 13B nach 2 Stunden und bei Beispiel 13C nach 2,5 Stunden.

## Patentansprüche

1. Verwendung von Pigmentpräparationen, enthaltend im wesentlichen Pigmente oder Mattierungsmittel oder eine Mischung hieraus, Bindemittel, Wasser und gewünschtenfalls weitere übliche Dispergier- und Hilfsmittel, zum Pigmentieren oder Mattieren von Zurichtmitteln für Leder und Lederimitate, dadurch gekennzeichnet, daß man als Bindemittel Copolymerisate aus

A) 40 bis 80 Gew.-% mindestens eines Vinylaromaten der allgemeinen Formel I

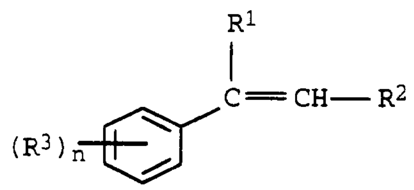

I

in der $R^1$, $R^2$ und $R^3$ für Wasserstoff, Methyl oder Ethyl stehen und n 1 oder 2 bedeutet,
B) 20 bis 60 Gew.-% Acrylsäure oder Methacrylsäure oder einer Mischung hieraus und
C) 0 bis 10 Gew.-% weiterer copolymerisierbarer Monomerer
in Form ihrer Salze einsetzt.

2. Verwendung von Pigmentpräparationen zum Pigmentieren oder Mattieren von Zurichtmitteln für Leder oder Lederimitate nach Anspruch 1, dadurch gekennzeichnet, daß man als Bindemittel Copolymerisate aus
A) 55 bis 65 Gew.-% Styrol oder $\alpha$-Methylstyrol oder einer Mischung hieraus und
B) 35 bis 45 Gew.-% Acrylsäure
in Form ihrer Ammoniumsalze einsetzt.

3. Verwendung von Pigmentpräparationen zum Pigmentieren oder Mattieren von Zurichtmitteln für Leder oder Lederimitate nach Anspruch 1 oder 2, dadurch gekennzeichnet, daß die Pigmentpräparationen zusätzlich als Hilfsmittel Ammoniumsalze oder Alkalimetallsalze von Polyacrylsäuren enthalten.

4. Verwendung von Pigmentpräparationen zum Pigmentieren oder Mattieren von Zurichtmitteln für Leder oder Lederimitate nach den Ansprüchen 1 bis 3, dadurch gekennzeichnet, daß die Pigmentpräparationen zusätzlich als Hilfsmittel Umsetzungsprodukte von Ethylendiamin mit Ethylenoxid oder Umsetzungsprodukte von Ethylendiamin mit Propylenoxid und danach mit Ethylenoxid enthalten.

5. Verfahren zur Herstellung von Zurichtmitteln für Leder und Lederimitate durch Zumischen von Pigmentpräparationen, enthaltend im wesentlichen Pigmente oder Mattierungsmittel oder eine Mischung hieraus, Bindemittel, Wasser und gewünschtenfalls weitere übliche Dispergier- und Hilfsmittel, dadurch gekennzeichnet, daß man als Bindemittel Copolymerisate gemäß den Ansprüchen 1 bis 4 einsetzt.

6. Verfahren zur Herstellung von Leder und Lederimitaten durch Behandeln mit Zurichtmitteln mit zugemischten Pigmentpräparationen, enthaltend im wesentlichen Pigmente oder Mattierungsmittel oder eine Mischung hieraus, Bindemittel, Wasser und gewünschtenfalls weitere übliche Dispergier- und Hilfsmittel, dadurch gekennzeichnet, daß man als Bindemittel Copolymerisate gemäß den Ansprüchen 1 bis 4 einsetzt.

7. Zurichtmittel für Leder und Lederimitate mit zugemischten Pigmentpräparationen, enthaltend im wesentlichen Pigmente oder Mattierungsmittel oder eine Mischung hieraus, Bindemittel, Wasser und gewünschtenfalls weitere übliche Dispergier- und Hilfsmittel, dadurch gekennzeichnet, daß sie als Bindemittel Copolymerisate gemäß Ansprüchen 1 bis 4 enthalten.

**Claims**

1. The use of pigment preparations consisting essentially of pigments or delusterants or a mixture thereof, binders, water and, if desired, further customary dispersants and auxiliaries for pigmenting or delustering finishes for leather and leather substitutes, which comprises using as binders copolymers of

A) from 40 to 80 % by weight of at least one aromatic vinyl compound of the general formula I

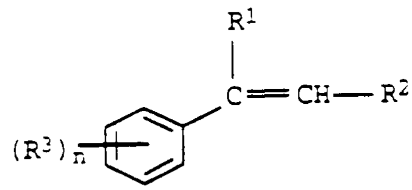

I

where $R^1$, $R^2$ and $R^3$ are each hydrogen, methyl or ethyl and n is 1 or 2,
B) from 20 to 60 % by weight of acrylic acid or methacrylic acid or a mixture thereof, and
C) from 0 to 10 % by weight of further copolymerizable monomers,
in the form of their salts.

**2.** The use of pigment preparations for pigmenting or delustering finishes for leather or leather substitutes as claimed in claim 1, wherein the binders used are copolymers of
A) from 55 to 65 % by weight of styrene or $\alpha$-methylstyrene or a mixture thereof, and
B) from 35 to 45 % by weight of acrylic acid,
in the form of their ammonium salts.

**3.** The use of pigment preparations for pigmenting or delustering finishes for leather or leather substitutes as claimed in claim 1 or 2, wherein the pigment preparations additionally contain ammonium salts or alkali metal salts of polyacrylic acids as auxiliaries.

**4.** The use of pigment preparations for pigmenting or delustering finishes for leather or leather substitutes as claimed in any of claims 1 to 3, wherein the pigment preparations additionally contain as auxiliaries reaction products of ethylenediamine with ethylene oxide or reaction products of ethylenediamine with propylene oxide and then with ethylene oxide.

**5.** A process for preparing finishes for leather and leather substitutes by admixture of pigment preparations consisting essentially of pigments or delusterants or a mixture thereof, binders, water and, if desired, further customary dispersants and auxiliaries, which comprises using as binders copolymers as claimed in any of claims 1 to 4.

**6.** A process for preparing leather and leather substitutes by treatment with finishes containing admixed pigment preparations consisting essentially of pigments or delusterants or a mixture thereof, binders, water and, if desired, further customary dispersants and auxiliaries, which comprises using as binders copolymers as claimed in any of claims 1 to 4.

**7.** Finishes for leather and leather substitutes containing admixed pigment preparations consisting essentially of pigments or delusterants or a mixture thereof, binders, water and, if desired, further customary dispersants and auxiliaries, containing as binders copolymers as claimed in any of claims 1 to 4.

## Revendications

**1.** Utilisation de préparations de pigments, qui contiennent, pour l'essentiel, des pigments ou des agents de matage, ou un mélange de ceux-ci, des liants, de l'eau et, éventuellement, d'autres dispersifs et adjuvants usuels, pour la pigmentation ou le matage d'agents de finissage pour le cuir ou des imitations du cuir, caractérisé en ce que l'on utilise, à titre de liants, des copolymères constitués de

A) 40 à 80% en poids d'au moins un composé vinylaromatique répondant à la formule générale I

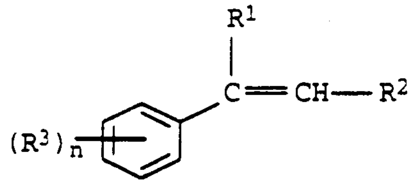

I

dans laquelle $R^1$, $R^2$ et $R^3$ représentent des atomes d'hydrogène, des radicaux méthyle ou éthyle et n est égal à 1 ou à 2,

B) 20 à 60% en poids d'acide acrylique ou d'acide méthacrylique, ou d'un mélange de ceux-ci et

C) 0 à 10% en poids d'autres monomères copolymérisables,

sous forme de leurs sels.

**2.** Utilisation de préparations de pigments pour la pigmentation ou le matage d'agents de finissage pour le cuir ou les imitations du cuir suivant la revendication 1, caractérisée en ce que l'on utilise, à titre de liants, des copolymères constitués de

A) 55 à 65% en poids de styrène ou d'$\alpha$-méthylstyrène, ou d'un mélange de ceux-ci et

B) 35 à 40% en poids d'acide acrylique,

sous forme de leurs sels d'ammonium.

**3.** Utilisation de préparations de pigments pour la pigmentation ou le matage d'agents de finissage pour le cuir ou les imitations du cuir suivant la revendication 1 ou 2, caractérisé en ce que les préparations de pigments contiennent, complémentairement et à titre d'adjuvants, des sels d'ammonium ou des sels de métaux alcalins de poly(acides acryliques).

**4.** Utilisation de préparations de pigments pour la pigmentation ou le matage d'agents de finissage pour le cuir ou des imitations du cuir suivant l'une quelconque des revendications 1 à 3, caractérisée en ce que les préparations de pigments contiennent, complémentairement et à titre d'adjuvants, des produits de la réaction de l'éthylènediamine avec l'oxyde d'éthylène, ou des produits de la réaction de l'éthylènediamine avec l'oxyde de propylène et ensuite avec l'oxyde d'éthylène.

**5.** Procédé de préparations d'agents de finissage pour le cuir et les imitations du cuir par le mélange de préparations de pigments, qui contiennent, pour l'essentiel, des pigments ou des agents de matage, ou un mélange de ces produits, des liants, de l'eau et, éventuellement, d'autres dispersifs et adjuvants usuels, caractérisé en ce que l'on utilise des copolymères suivant l'une quelconque des revendications 1 à 4 à titre de liants.

**6.** Procédé de préparation du cuir et d'imitations du cuir par le traitement par des agents de finissage avec des préparations de pigments ajoutées sous mélange, qui contiennent, pour l'essentiel, des pigments ou des agents de matage, ou un mélange de ceux-ci, des liants, de l'eau et, éventuellement, d'autres dispersifs et adjuvants usuels, caractérisé en ce que l'on utilise des copolymères suivant l'une quelconque des revendications 1 à 4 à titre de liants.

**7.** Agents de finissage pour le cuir et les imitations du cuir avec des préparations de pigments ajoutées sous mélange, qui contiennent, pour l'essentiel, des pigments ou des agents de matage, ou un mélange de ces produits, des liants, de l'eau et, éventuellement, d'autres dispersifs et adjuvants usuels, caractérisés en ce qu'ils contiennent des copolymères suivant l'une quelconque des revendications 1 à 4 à titre de liants.